# EUROPÄISCHE PATENTANMELDUNG

(11) **EP 2 147 839 A2**
(43) Veröffentlichungstag der Anmeldung: **27.01.2010**
(21) Anmeldenummer: 09162603.6
(22) Anmeldetag: 12.06.2009
(51) Int. Cl.: B60S 1/34

(54) **Abtriebswelle-Wischerarm-Verbindung sowie Scheibenwischerantrieb**

(30) Priorität: 24.07.2008 DE 102008040695
(71) Anmelder: Robert Bosch GmbH, 70442 Stuttgart (DE)
(72) Erfinder: Hawighorst, Achim, 77830 Buehlertal (DE); Huesges, Mario, 77830 Buehlertal (DE)

(57) **Zusammenfassung**

Die Erfindung betrifft eine Abtriebswelle-Wischerarm-Verbindung (1) für einen Scheibenwischerantrieb (2), insbesondere in einem Kraftfahrzeug, umfassend eine pendelnd antreibbare Abtriebswelle (4) und einen mit Befestigungsmitteln (10) an der Abtriebswelle (4) drehfest festgelegten Wischerarm (3). Erfindungsgemäß ist vorgesehen, dass der Wischerarm (3) mit einem Befestigungsabschnitt (6) in eine stirnseitige Öffnung (9) der Abtriebswelle (4) eingreifend angeordnet und dort festgelegt ist. Ferner betrifft die Erfindung einen Scheibenwischerantrieb (2).

## Beschreibung

### Stand der Technik

Die Erfindung betrifft eine Abtriebswelle-Wischerarm-Verbindung für einen Scheibenwischerantrieb, insbesondere in einem Kraftfahrzeug gemäß dem Oberbegriff des Anspruchs 1 sowie einen Scheibenwischerantrieb gemäß Anspruch 11.

Aus der DE 40 289 02 B4 ist ein Wischerarm bekannt, der in einem Befestigungsabschnitt eine sich konisch verjüngende Befestigungsöffnung aufweist. Mit Hilfe dieser Befestigungsöffnung kann der Wischerarm über einen gerändelten Außenkonusabschnitt einer Abtriebswelle (Wischerwelle) geschoben und mittels einer mit einem Außengewinde der Wischerwelle zu verschraubenden Mutter axial gegen den gerändelten Außenkonusabschnitt gepresst werden, so dass eine drehfeste Verbindung zwischen Abtriebswelle und Wischerarm resultiert.

Die bekannte Verbindung aus Wischerarm und Abtriebswelle hat sich bewährt. Es bestehen jedoch Bestrebungen, noch kürzer bauende Abtriebswelle-Wischerarm-Kombinationen einzusetzen.

### Offenbarung der Erfindung

### Technische Aufgabe

Der Erfindung liegt daher die Aufgabe zugrunde, eine alternative, möglichst kurz bauende Abtriebswelle-Wischerarm-Verbindung für einen Scheibenwischerantrieb vorzuschlagen. Ferner besteht die Aufgabe darin, einen Scheibenwischerantrieb mit mindestens einer entsprechend optimierten Abtriebswelle-Wischerarm-Verbindung vorzuschlagen.

### Technische Lösung

Diese Aufgabe wird hinsichtlich der Abtriebswelle-Wischerarm-Verbindung mit den Merkmalen des Anspruchs 1 und hinsichtlich des Scheibenwischerantriebs mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den Wischerarm nicht wie im Stand der Technik am Außenumfang der Abtriebswelle festzulegen, sondern innerhalb der Abtriebswelle. Durch diese Maßnahme kann auf das Vorsehen eines am Außenumfang der Abtriebswelle vorgesehenen, gerändelten Konusabschnitts verzichtet werden, wodurch die Abtriebswelle (Wischerwelle)-Wischerarm-Verbindung nicht nur kürzer, sondern auch schmaler baut. Darüber hinaus kann bei entsprechender Ausbildung der Verbindung erreicht werden, dass die Befestigungsmittel von außen nicht oder nur schwer sichtbar sind, wodurch die ästhetische Wirkung einer derart ausgebildeten Abtriebswelle-Wischerarm-Verbindung weiter verbessert werden kann. Darüber hinaus können die Befestigungsmittel vor Umwelteinflüssen und Schmutz besser geschützt werden. Ferner kann die Festigkeit der Verbindung zwischen dem Wischerarm und der Abtriebswelle verbessert werden, da für die Befestigung des Wischerarms die zumindest nahezu die gesamte Länge einer den Befestigungsabschnitt des Wischerarm aufnehmenden Öffnung in der, vorzugsweise als Hohlwelle ausgebildeten, Abtriebswelle ausgenutzt werden kann. Weiterhin ist von Vorteil, dass für unterschiedliche Kraftfahrzeuge einheitliche Scheibenwischerantriebe eingesetzt werden können, die sich lediglich in der Ausbildung des Wischerarms unterscheiden, der sowieso für jedes Fahrzeug individuell gestaltet werden muss. Es wird also ein universell einsetzbarer Scheibenwischerantrieb erhalten. Im Hinblick auf die Ausbildung der Öffnung zur zumindest abschnittsweisen Aufnahme des Befestigungsabschnitts des Wischerarms gibt es unterschiedliche Möglichkeiten. So ist es denkbar, die Öffnung als Sacklochöffnung (Sacklochbohrung) stirnseitig in die Abtriebswelle einzubringen. Alternativ ist es möglich, die Abtriebswelle durchgehend als Hohlwelle, also mit einer als Durchgangsöffnung ausgebildeten Öffnung zur Aufnahme des Befestigungsabschnitts auszubilden.

In Weiterbildung der Erfindung ist mit Vorteil vorgesehen, dass die Befestigungsmittel derart ausgebildet sind, dass der Wischerarm form- und/oder reibschlüssig mit dem Innenumfang der Öffnung verbunden ist. Besonders vorteilhaft ist dabei, dass die Robustheit der Verbindung durch die Wahl der Axialerstreckung der form- und/oder reibschlüssigen Verbindung, d.h. die Axialerstreckung des Kontaktsbereichs zwischen dem Befestigungsabschnitt und dem Öffnungsinnenumfang gewählt werden kann, wobei hierfür im Vergleich zum Stand der Technik weite Grenzen zur Verfügung stehen. Die Axialerstreckung der form- und/oder reibschlüssigen Verbindung wird im Wesentlichen lediglich durch die Axialerstreckung der hierfür ausreichend langen Abtriebswelle, genauer der, insbesondere konzentrischen, Öffnung innerhalb der Abtriebsöffnung, begrenzt.

Besonders bevorzugt ist es, wenn die Befestigungsmittel den Wischerarm in der Art eines Dübels in der Öffnung festlegend ausgebildet sind. Anders ausgedrückt erfolgt die Befestigung durch radiales Aufspreizen eines Axialabschnitts des Befestigungsabschnittes des Wischerarms. Auf diese Weise ist es möglich, dass die formschlüssige Verbindung ausschließlich innerhalb und nicht außerhalb der Abtriebswelle realisiert ist.

In Weiterbildung der Erfindung ist mit Vorteil vorgesehen, dass die Befestigungsmittel mindestens ein in radialer Richtung aufspreizbares Spreizelement aufweisen, welches bevorzugt mit dem Innenumfang der den Befestigungsabschnitt aufnehmenden Öffnung eine form- und/oder reibschlüssige Verbindung eingeht. Ganz besonders bevorzugt ist es, wenn mehrere derartige Spreizelemente, vorzugsweise in Umfangsrichtung nebeneinander, vorgesehen sind. Besonders bevorzugt ist eine Ausführungsform, bei der das mindestens eine Spreizelement endseitig, also im Bereich des freien Endes des Befestigungsabschnittes angeordnet ist. Unter einem Spreizelement wird dabei ein Bauteilabschnitt verstanden, der in radialer Richtung aufweitbar und/oder in radialer Richtung nach außen verstellbar ist, um auf diese Weise einen Form- und/oder Reibschluss mit dem Innenumfang der Öffnung in der Abtriebswelle herzustellen.

Ganz besonders bevorzugt ist es dabei, wenn das Spreizelement zur Herstellung einer formschlüssigen Verbindung mit dem Innenumfang der Öffnung eine Oberflächenstruktur, beispielsweise eine Verzahnung, insbesondere in Form einer Rändelung oder ein Gewinde aufweist. Dabei entsteht die formschlüssige Verbindung bevorzugt durch radiales Aufspreizen des Spreizelementes, insbesondere dadurch, dass sich die Oberflächenstruktur in den, vorzugsweise vor dem Festlegen glatten (unstrukturierten) Innenumfang der Öffnung der Abtriebswelle eingräbt.

In Weiterbildung der Erfindung ist mit Vorteil vorgesehen, dass zum radialen Aufspreizen mindestens eines Spreizelementes eine ein- oder mehrteilige Betätigungseinrichtung vorgesehen ist, aus deren Betätigung eine radiale Verstellung bzw. Aufweitung des Spreizelementes resultiert.

Ganz besonders bevorzugt ist es dabei, wenn die Betätigungseinrichtung als Schraube ausgebildet ist, zumindest eine Schraube umfasst, wobei durch Eindrehen der Schraube, vorzugsweise in ein im Befestigungsabschnitt vorgesehenes Innengewinde, das mindestens eine Spreizelement nach radial außen verstellt und/oder aufgeweitet wird. Bevorzugt weist die Schraube hierzu einen endseitigen, insbesondere außenkegelförmigen, Aufweitabschnitt auf, der mit dem Innenumfang des mindestens einen Spreizelementes derart zusammenwirkt, dass auf das mindestens eine Spreizelement eine in radialer Richtung nach außen gerichtete Spreizkraft wirkt, die das Spreizelement nach außen verstellt und/oder aufweitet und somit form- und/oder reibschlüssig mit dem Innenumfang der Öffnung der Abtriebswelle verbindet.

Alternativ zu einer einteiligen Ausbildung der Betätigungseinrichtung ist es möglich, diese zumindest zweiteilig auszubilden, wobei die Betätigungseinrichtung in diesem Fall eine Schraube und ein Betätigungselement umfasst, das mit der Schraube verschraubt ist und beim Verdrehen der Schraube in axialer Richtung in einen Bereich radial innerhalb des mindestens einen Spreizelementes hineinverstellt wird und dabei derart mit dem Spreizelement zusammenwirkt, dass dieses in radialer Richtung nach außen verstellt und/oder aufgeweitet wird und somit eine formschlüssige und/oder reibschlüssige Verbindung mit dem Innenumfang der den Befestigungsabschnitt aufnehmenden Öffnung in der Abtriebswelle ausbildet.

Zur Realisierung einer formschlüssigen Verbindung ist es bevorzugt, wenn zumindest das Spreizelement, vorzugsweise der gesamte Befestigungsabschnitt, aus Metall ausgebildet ist/sind. Ganz besonders bevorzugt ist es dabei, wenn auch die Abtriebswelle entweder vollständig oder zumindest im Bereich der form- und/oder reibschlüssigen Verbindung ebenfalls aus Metall ausgebildet ist.

Die Erfindung führt auch auf einen Scheibenwischerantrieb mit mindestens einer zuvor beschriebenen Abtriebswelle-Wischerarm-Verbindung. Ganz besonders bevorzugt handelt es sich bei dem Scheibenwischerantrieb um einen gestängefreien Scheibenwischerantrieb, also um einen Scheibenwischerdirektantrieb, bei dem die Abtriebswelle entweder unmittelbar von einer Motorwelle gebildet ist, oder drehfest mit der Motorwelle verbunden ist. Alternativ ist bei dem Direktantrieb zwischen der Motorwelle und der Abtriebswelle ein, insbesondere als Schneckengetriebe ausgebildetes, Verzahnungsgetriebe vorgesehen, wobei in diesem Fall die Abtriebswelle ein Getriebegehäuse durchragend angeordnet ist. Durch das Vorsehen einer zuvor beschriebenen Abtriebswelle-Wischerarm-Verbindung wird ein besonders robuster und kleinbauender Scheibenwischerantrieb erhalten, der bis auf den Wischerarm unverändert in einer Vielzahl unterschiedlicher Kraftfahrzeuge einsetzbar ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a und Fig. 1b: ein erstes Ausführungsbeispiel einer Abtriebswelle-Wischerarm-Verbindung eines Scheibenwischerantriebs mit einer einteiligen Betätigungseinrichtung und
- Fig. 2a und Fig. 2b: ein alternatives Ausführungsbeispiel einer Abtriebswelle-Wischerarm-Verbindung für einen Scheibenwischerantrieb mit einer zweiteiligen Betätigungseinrichtung.

### Ausführungsformen der Erfindung

In den Figuren sind gleiche Elemente und Elemente mit der gleichen Funktion mit den gleichen Bezugszeichen gekennzeichnet.

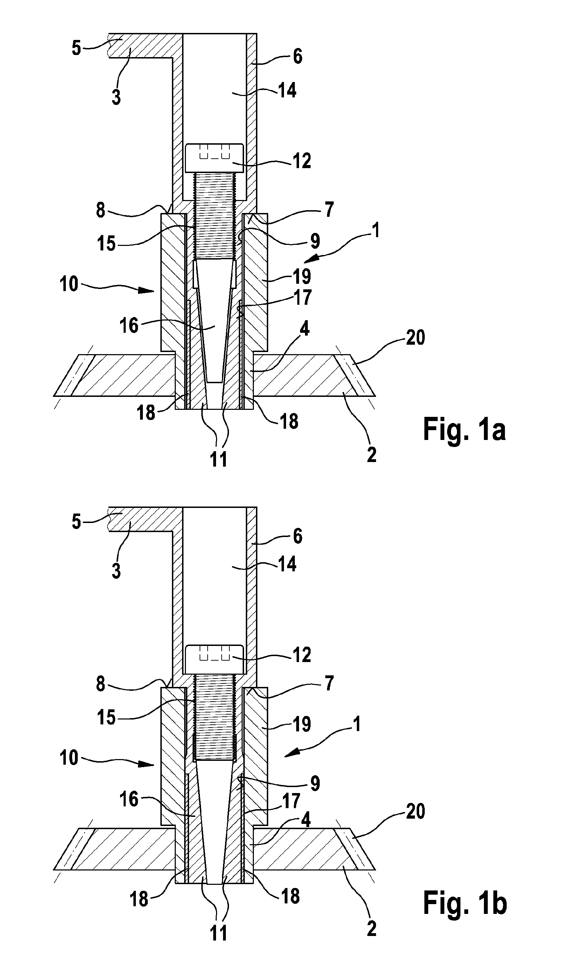

In den Fig. 1a und 1b ist ein erstes Ausführungsbeispiel einer Abtriebswelle-Wischerarm-Verbindung 1 (im Folgenden Verbindung) in einem nur abschnittsweise dargestellten Scheibenwischerantrieb 2 dargestellt. Dabei ist in Fig. 1a ein Montageschritt gezeigt, bei dem ein nur ausschnittsweise dargestellter Wischerarm 3 noch nicht endgültig an einer Abtriebswelle 4 (Wischerwelle) des Scheibenwischerantriebs 2 festgelegt ist, wohingegen die Verbindung 1 in Fig. 1b fertig montiert dargestellt ist.

Der Abtriebswelle 4 ist ein Lager 19 zugeordnet, das in der Zeichnungsebene oberhalb eines Abtriebszahnrades 20 angeordnet ist, welches drehfest mit der Abtriebswelle 4 verbunden und von einer nicht dargestellten Getriebeschnecke angetrieben wird, die auf der Motorwelle eines elektrischen, ebenfalls nicht dargestellten, Antriebsmotors sitzt.

Der Wischerarm 3 umfasst einen im Wesentlichen rechtwinklig zu einem Wischabschnitt 5 verlaufenden Befestigungsabschnitt 6, wobei im Wischabschnitt 5 in an sich bekannter Weise ein nicht dargestelltes Gelenk zum Verschwenken eines einen Wischergummi tragenden Abschnitts des Wischabschnitts 5 um eine im Wesentlichen parallel zur nicht dargestellten Fahrzeugscheibe verlaufende Schwenkachse angeordnet sein kann.

Wie sich aus den Fig. 1a und 1b ergibt, liegt der Befestigungsabschnitt 6 mit einer von einem Durchmessersprung gebildeten äußeren Ringschulter 7 auf einer Stirnseite 8 der Abtriebswelle 4 auf. Zu erkennen ist, dass die Abtriebswelle 4 als Hohlwelle ausgebildet ist, die eine als Durchgangsöffnung ausgebildete, axial durchgehende stirnseitige Öffnung 9 aufweist. Der Befestigungsabschnitt 6 ragt mit einem verringerten Durchmesserabschnitt in axialer Richtung in die stirnseitige Öffnung 9 in die Abtriebswelle 4 hinein.

Die Verbindung 1 umfasst Befestigungsmittel 10 zum Festlegen des Befestigungsabschnittes 6 innerhalb der Öffnung 9. Die Befestigungsmittel 10 umfassen dabei mehrere endseitig am Befestigungsabschnitt 6 festgelegte, innerhalb der Öffnung 9 angeordnete Spreizelemente 11, wobei zwei in Umfangsrichtung nebeneinander angeordnete Spreizelemente 11 über einen in axialer Richtung verlaufenden Spalt voneinander getrennt sind, so dass die Spreizelemente 11 getrennt voneinander in radialer Richtung nach außen verstellbar sind. Zum Verstellen der Spreizelemente 11 in radialer Richtung nach außen umfassen die Befestigungsmittel 10 eine einteilige, als Schraube 12 ausgebildete Betätigungseinrichtung 13, die vollständig innerhalb des Befestigungsabschnittes 6 aufgenommen ist. Hierzu ist der Befestigungsabschnitt 6 mit einer Stufenbohrung 14 versehen, in die die Schraube 12 in axialer Richtung eingeführt ist und somit auch axial in die Abtriebswelle 4, genauer in die stirnseitige Öffnung 9, hineinragt. Am Innenumfang eines unteren durchmesserverringerten Abschnitts der Stufenbohrung 14 ist ein Innengewinde 15 vorgesehen, in das die Schraube 12 mit einem korrespondierenden Außengewinde einschraubbar ist. Endseitig weist die Schraube 12 einen als Außenkonus ausgebildeten Aufweitabschnitt 16 auf, der in axialer Richtung von oben nach unten in einen Bereich radial innerhalb der Spreizelemente 11 hinein verstellbar ist. Dies wird durch Verdrehen der Schraube 12 im Innengewinde 15 erreicht. Hierbei wirkt der Aufweitabschnitt 16 mit seiner außenkonischen Mantelfläche mit einem von den Spreizelementen 11 gebildeten Innenkonus zusammen, derart, dass auf die Spreizelemente 11 eine nach radial außen gerichtete Spreizkraft wirkt, die die Spreizelemente 11 nach radial außen gegen den Innenumfang 17, der als Zylinderbohrung ausgebildeten Öffnung 9, drückt. Die Spreizelemente 11 sind an ihrem Außenumfang mit einer Oberflächenstruktur 18 versehen, die sich in den Innenumfang 17 (Innenumfangswand) eingräbt und somit den Befestigungsabschnitt 6, genauer die Spreizelemente 11, formschlüssig mit der Abtriebswelle 4 verbindet.

Der Verbindungsvorgang ist aus einem Vergleich der Fig. 1a und Fig. 1b ersichtlich. Bei der Darstellung gemäß Fig.1a sind die Spreizelemente 11 noch nicht aufgeweitet. Durch axiales Einschrauben der Schraube 12 in Richtung in die Abtriebswelle 4 hinein werden die Spreizelemente 11 von dem konischen Aufweitabschnitt 16 nach radial außen verstellt, wodurch zwischen der Oberflächenstruktur 18 der Spreizelemente 11 und dem Innenumfang 17 der Abtriebswelle 4 eine formschlüssige Verbindung realisiert wird.

Wie sich aus den Fig. 1a und 1b ergibt, sind die Befestigungsmittel 10 vollständig innerhalb des Befestigungsabschnittes 6 sowie innerhalb der Abtriebswelle 4 aufgenommen und somit von außen nicht sichtbar und somit nicht anfällig für Umwelteinflüsse oder Verschmutzung.

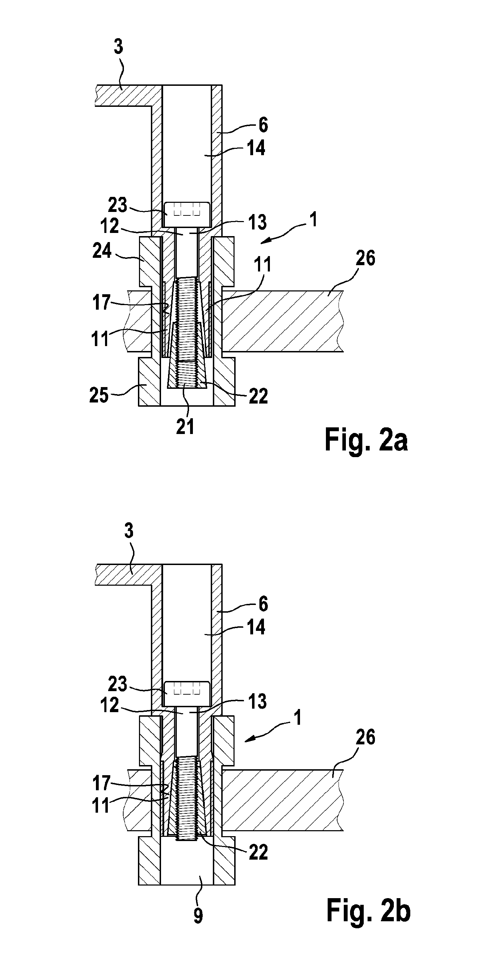

In den Fig. 2a und 2b ist ein alternatives Ausführungsbeispiel einer Verbindung 1 gezeigt. Zur Vermeidung von Wiederholungen wird im Folgenden im Wesentlichen nur auf Unterschiede zu dem Ausführungsbeispiel gemäß den Fig. 1a und 1b eingegangen, wobei im Hinblick auf die Gemeinsamkeiten auf die Fig. 1a und 1b mit zugehöriger Figurenbeschreibung verwiesen wird.

Im Gegensatz zu dem Ausführungsbeispiel gemäß den Fig. 1a und 1b ist die Betätigungseinrichtung 13 zum radialen Verstellen der Spreizelemente 11 nicht ein-, sondern zweiteilig ausgebildet. Die Betätigungseinrichtung 13 umfasst dabei eine Schraube 12, die im Gegensatz zu dem Ausführungsbeispiel gemäß den Fig. 1a und 1b nicht mit einem Innengewinde des Befestigungsabschnittes 6, sondern mit einem Innengewinde 21 eines durch Verdrehen der Schraube 12 relativ zu dieser axial verstellbaren Betätigungselementes 22 verschraubt ist. Das Betätigungselement 22 weist eine Außenkonusform auf und wird beim Verdrehen der Schraube 12 in axialer Richtung hin zum Schraubenkopf 23 der Schraube 12 und damit in einen Bereich radial innerhalb der Spreizelemente 11 hinein verstellt und spreizt diese dabei nach radial außen auf, so dass sich die in Fig. 2b gezeigte, formschlüssige Verbindung zwischen den Spreizelementen 11 und dem Innenumfang 17 der Öffnung 9 ergibt. Bevorzugt ist das Betätigungselement 22 derart in Umfangsrichtung fixiert, dass es sich beim Eindrehen der Schraube 12 nicht mitdreht, sondern ausschließlich in axialer Richtung in einen Bereich innerhalb der Spreizelemente 11 hinein verstellt wird.

Im Gegensatz zu dem Ausführungsbeispiel gemäß Fig. 1a und Fig. 1b sind der Abtriebswelle 4 gemäß den Darstellungen der Fig. 2a und 2b zwei in axialer Richtung beabstandete Lager 24, 25 zugeordnet, wobei die Lager 24, 25 ein Getriebeelement 26 sandwichartig zwischen sich aufnehmen, mit dem die Abtriebswelle 4 und damit der drehfest mit der Abtriebswelle 4 verbundene Wischerarm 3 pendelnd antreibbar ist.

## Patentansprüche

1. Abtriebswelle-Wischerarm-Verbindung für einen Scheibenwischerantrieb (2), insbesondere in einem Kraftfahrzeug, umfassend eine pendelnd antreibbare Abtriebswelle (4) und einen mit Befestigungsmitteln (10) an der Abtriebswelle (4) drehfest festgelegten Wischerarm (3),
**dadurch gekennzeichnet,**
**dass** der Wischerarm (3) mit einem Befestigungsabschnitt (6) in eine stirnseitige Öffnung (9) der Abtriebswelle (4) eingreifend angeordnet und dort festgelegt ist.

2. Verbindung nach Anspruch 1,
**dadurch gekennzeichnet,**
**dass** die Befestigungsmittel (10) den Befestigungsabschnitt (6) form- und/oder reibschlüssig mit dem Innenumfang (17) der Öffnung (9) verbindend ausgebildet sind.

3. Verbindung nach einem der Ansprüche 1 oder 2,
**dadurch gekennzeichnet,**
**dass** die Befestigungsmittel (10) den Befestigungsabschnitt (6) in der Art eines Dübels in der Öffnung (9) festlegend ausgebildet sind.

4. Verbindung nach einem der vorhergehenden Ansprüche,
**dadurch gekennzeichnet,**
**dass** die Befestigungsmittel (10), vorzugsweise endseitig am Befestigungsabschnitt (6), mindestens ein Spreizelement (11), vorzugsweise mehrere in Umfangsrichtung benachbarte Spreizelemente (11), umfassen.

5. Verbindung nach Anspruch 4,
**dadurch gekennzeichnet,**
**dass** das mindestens eine Spreizelement (11) an seinem Außenumfang mit einer Oberflächenstruktur (18), insbesondere einer Verzahnung oder einen Gewinde, zum Herstellen einer formschlüssigen Verbindung mit dem Innenumfang (17) der Öffnung (9) aufweist.

6. Verbindung nach einem der Ansprüche 4 oder 5,
**dadurch gekennzeichnet,**
**dass** die Befestigungsmittel (10) eine mit dem mindestens einen Spreizelement (11) zusammenwirkende Betätigungseinrichtung (13) umfassen, mit denen das Spreizelement (11) in radialer Richtung nach außen verstellbar und/oder aufweitbar ist.

7. Verbindung nach Anspruch 6,
**dadurch gekennzeichnet,**
**dass** die Betätigungseinrichtung (13) eine Schraube (12) mit einem, insbesondere endseitigen, vorzugsweise außenkegelförmigen, Aufweitabschnitt (16) aufweist, der beim Eindrehen der Schraube (12) mit dem mindestens einen Spreizelement (11), vorzugsweise mit einem Innenkegelabschnitt des Spreizelementes (11), das Spreizelement (11) nach radial außen verstellend und/oder aufweitend zusammenwirkt.

8. Verbindung nach Anspruch 6,
**dadurch gekennzeichnet,**
**dass** die Betätigungseinrichtung (13) eine Schraube (12) umfasst, mit der ein, insbesondere außenkegelförmiges, Betätigungselement (22) axial in einen Bereich radial innerhalb des mindestens einen Spreizelementes (11) einziehbar und dieses dabei nach radial außen verstellt und/oder aufweitet.

9. Verbindung nach einem der Ansprüche 3 bis 8,
**dadurch gekennzeichnet,**
**dass** das mindestens eine Spreizelement (11) aus Metall ausgebildet ist.

10. Scheibenwischerantrieb, insbesondere Scheibenwischerdirektantrieb, mit einer Abtriebswelle-Wischerarm-Verbindung (1) nach einem der vorhergehenden Ansprüche.
